(19) Europäisches Patentamt
European Patent Office
Office européen des brevets

(11) Veröffentlichungsnummer: **0 532 963 A2**

# (12) EUROPÄISCHE PATENTANMELDUNG

(21) Anmeldenummer: **92114807.8**

(22) Anmeldetag: **29.08.92**

(51) Int. Cl.5: **C08L 77/06**, //(C08L77/06, 77:00)

(30) Priorität: **18.09.91 DE 4131028**

(43) Veröffentlichungstag der Anmeldung: **24.03.93 Patentblatt 93/12**

(84) Benannte Vertragsstaaten: **BE CH DE ES FR GB LI NL**

(71) Anmelder: **BASF Aktiengesellschaft**
**Carl-Bosch-Strasse 38**
**W-6700 Ludwigshafen(DE)**

(72) Erfinder: **Hurley, James, Dr.**
**Naumburger Weg 4**
**W-6800 Mannheim 31(DE)**
Erfinder: **Goetz, Walter, Dr.**
**Dhauner Strasse 79**
**W-6700 Ludwigshafen(DE)**
Erfinder: **Dorst, Hans Georg, Dr.**
**Berliner Strasse 23**
**W-6705 Deidesheim(DE)**

## (54) Thermoplastische Formmassen auf der Basis von Polyamidmischungen.

(57) Thermoplastische Formmassen, enthaltend

A) 1 bis 18 Gew. -% eines teilaromatischen Copolymerisats und einem Triamingehalt von unter 0,5 Gew.-% aufgebaut aus

$A_1$) 20 bis 90 Gew.-% Einheiten, die sich von Terephthalsäure und Hexamethylendiamin ableiten, $A_2$) 0 bis 50 Gew.-% Einheiten, die sich von $\epsilon$ -Caprolactam ableiten und

$A_3$) 0 bis 80 Gew. -% Einheiten, die sich von Adipinsäure und Hexamethylendiamin ableiten,

$A_4$) 0 bis 40 Gew.-% weiteren polyamidbildenden Monomeren,

wobei der Anteil der Komponente ($A_2$) oder ($A_3$) oder ($A_4$) oder deren Mischungen mindestens 10 Gew. -% beträgt,

B) 22 bis 99 Gew.-% eines von A) verschiedenen teilkristallinen Polyamids

C) 0 bis 60 Gew. -% faser- oder teilchenförmige Füllstoffe oder deren Mischungen

D) 0 bis 40 Gew.-% eines kautschukelastischen Polymerisates.

EP 0 532 963 A2

Die Erfindung betrifft thermoplastische Formmassen, enthaltend

A) 1 bis 18 Gew. -% eines teilaromatischen Copolymerisats und einem Triamingehalt von unter 0,5 Gew.-% aufgebaut aus

$A_1$) 20 bis 90 Gew.-% Einheiten, die sich von Terephthalsäure und Hexamethylendiamin ableiten,

$A_2$) 0 bis 50 Gew.-% Einheiten, die sich von $\epsilon$-Caprolactam ableiten und

$A_3$) 0 bis 80 Gew. -% Einheiten, die sich von Adipinsäure und Hexamethylendiamin ableiten,

$A_4$) 0 bis 40 Gew. -% weiteren polyamidbildenden Monomeren,

wobei der Anteil der Komponente ($A_2$) oder ($A_3$) oder ($A_4$) oder deren Mischungen mindestens 10 Gew. -% beträgt,

B) 22 bis 99 Gew. -% eines von A) verschiedenen teilkristallinen Polyamids

C) 0 bis 60 Gew. -% faser- oder teilchenförmige Füllstoffe oder deren Mischungen

D) 0 bis 40 Gew.-% eines kautschukelastischen Polymerisates.

Darüber hinaus betrifft die Erfindung die Verwendung derartiger thermoplastischer Formmassen zur Herstellung von Fasern, Folien und Formkörpern und die aus den thermoplastischen Formmassen erhältlichen Formkörper.

Polyamide wie Poly- $\epsilon$ -Caprolactam und Polyhexamethylenadipinsäureamidzählen zu den seit langem bekannten technischen Kunststoffen und haben auf vielen Gebieten Anwendung gefunden.

Sie zeichnen sich im allgemeinen durch eine große Härte und Steifigkeit sowie Wärmeformbeständigkeit aus, sind darüber hinaus widerstandsfähig gegen Abrieb und Verschleiß und auch beständig gegen viele Chemikalien.

Mischungen unterschiedlicher Polyamide zur Erzielung verbesserter einzelner Eigenschaften im Hinblick auf bestimmte Anwendungen sind Gegenstand zahlreicher Publikationen.

Polyamidmischungen aus teilkristallinen aliphatischen Polyamiden und teilaromatischen, jedoch amorphen Polyamiden sind aus der EP-A 70 0001 und EP-A 73 036 bekannt. Die Mischungen weisen verbesserte Beständigkeit gegenüber bestimmten Chemikalien und eine verbesserte Schlagzähigkeit auf. Die Steifigkeit derartiger Mischungen ist jedoch verbesserungswürdig.

Insbesondere für faserverstärkte Polyamide ist der Zusatz von geringen Mengen amorpher Polyamiden zur Verbesserung der Oberfläche von Formkörpern bekannt und aus Kunststofftechnik, Verbundwerkstoffe und Werkstoffverbunde in der Kunststofftechnik, S. 55-81 VDI Verlag GmbH, 1982.

Die Festigkeit und Steifigkeit derartiger Formkörper ist nicht ausreichend und bei zusätzlich eingefärbten Einstellungen zeigen die Formkörper eine ungenügende gleichmäßige Einfärbung sowie Oberflächenglanz. Insgesamt stören amorphe Fremdpolymere bedingt durch einen unregelmäßigen Kettenaufbau die Wasserstoff-Brückenbildung des Polyamids, so daß eine antinukleierende Wirkung durch den amorphen Zusatz hervorgerufen wird. Infolgedessen entstehen bei der Verarbeitung dieser Formmassen Probleme im Hinblick auf eine langsame Kristallisationsgeschwindigkeit.

Aus der EP-A 355 315 sind Formmassen aus teilaromatischen und teilkristallinen aliphatischen Polyamidmischungen bekannt. Durch Zugabe geringer Mengen teilkristalliner, aliphatischer Polyamide - in den Beispielen bis zu 10 Gew. -% - wurde die Wärmeformbeständigkeit verbessert. Die Steifigkeit ist häufig verbesserungswürdig. Insbesondere bei glasfaserverstärkten und gleichzeitig gefärbten Formkörpern ist der Oberflächenglanz nicht zufriedenstellend.

Der vorliegenden Erfindung lag daher die Aufgabe zugrunde, thermoplastische Formmassen auf der Basis von teilaromatischen und teilkristallinen Polyamiden zur Verfügung zu stellen, die neben einer guten Steifigkeit auch eine bessere Oberfläche der Formkörper aufweisen.

Insbesondere glasfaserverstärkte und gefärbte Formkörper zeichnen sich durch einen verbesserten Oberflächenglanz sowie Einheitlichkeit der Einfärbungen aus.

Demgemäß wurden die eingangs definierten Formmassen gefunden.

Bevorzugte Formmassen dieser Art und ihre Verwendung sind den Unteransprüchen zu entnehmen.

Als Komponente A) enthalten die erfindungsgemäßen thermoplastischen Formmassen 1 bis 18, vorzugsweise 4 bis 17 und insbesondere 9 bis 15 Gew. -% eines teilaromatischen, teilkristallinen Copolyamids, aufgebaut aus:

$A_1$) 20 bis 90 Gew. -% Einheiten, die sich von Terephthalsäure und Hexamethylendiamin ableiten,

$A_2$) 0 bis 50 Gew.-% Einheiten, die sich von $\epsilon$ -Caprolactam ableiten und

$A_3$) 0 bis 80 Gew. -% Einheiten, die sich von Adipinsäure und Hexamethylendiamin ableiten,

$A_4$) 0 bis 40 Gew.-% weiteren polyamidbildenden Monomeren,

wobei der Anteil der Komponente ($A_2$) oder ($A_3$) oder ($A_4$) oder deren Mischungen mindestens 10 Gew.-% beträgt.

Die Komponente $A_1$) enthält 20 bis 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von $\epsilon$ -Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von $\epsilon$ -Caprolactam ableiten, beträgt maximal 50 Gew.-%, vorzugsweise 20 bis 50 Gew.-%, insbesondere 25 bis 40 Gew. -%, während der Anteil an Einheiten die sich von Adipinsäure und Hexamethylendiamin ableiten, bis zu 80 Gew. -%, vorzugsweise 30 bis 75 Gew.-% und insbesondere 35 bis 60 Gew.-% beträgt.

Die Copolyamide können auch sowohl Einheiten von $\epsilon$ -Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew. -% beträgt, vorzugsweise mindestens 20 Gew.-%. Das Verhältnis der Einheiten, die sich von e-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte X1 bis X5 festgelegten Fünfecks liegt, wobei die Punkte X1 bis X5 folgendermaßen definiert sind:

$X_1$ 40 Gew. -% Einheiten A1)
60 Gew. -% Einheiten A3)
$X_2$ 60 Gew. -% Einheiten A1)
40 Gew. -% Einheiten A3)
$X_3$ 80 Gew. -% Einheiten A1)
5 Gew. -% Einheiten A2)
15 Gew. -% Einheiten A3)
$X_4$ 80 Gew. -% Einheiten A1)
20 Gew. -% Einheiten A2)
$X_5$ 50 Gew. -% Einheiten A1)
50 Gew. -% Einheiten A2)

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $A_1$) und 20 bis 50, vorzugsweise 25 bis 40 Gew.-% Einheiten, die sich von $\epsilon$ -Caprolactam ableiten (Einheiten $A_2$)) enthalten, erwiesen.

Neben den vorstehend beschriebenen Einheiten $A_1$) bis $A_3$) können die teilaromatischen Copolyamide in Mengen bis 40, vorzugsweise 10 bis 30 Gew.-% Gew.-% und insbesondere 20 bis 30 Gew.-% an weiteren polyamidbildenden Monomeren $A_4$) enthalten; wie sie von anderen Polyamiden bekannt sind.

Aromatische Dicarbonsäuren A4) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsäure, wobei Isophtalsäure besonders bevorzugt sind.

Weitere polyamidbildende Monomere $A_4$) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactazmen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, $\omega$-Aminoundecansäure und Laurinlactam als Vertreter von Lactamen bzw. Aminocarbonsäuren genannt.

Hierbei sind folgende Zusammensetzungen der Komponente (A) besonders bevorzugt:

$A_1$) 65 bis 85 Gew. -% Einheiten, die sich von Terephthalsäure und Hexamethylendiamin ableiten
$A_4$) 15 bis 35 Gew. -% Einheiten, die sich von Isophthalsäure und Hexamethylendiamin ableiten
oder
$A_1$) 50 bis 70 Gew. -% Einheiten, die sich von Terephthalsäure und Hexamethylendiamin ableiten und
$A_3$) 10 bis 20 Gew. -% Einheiten, die sich von Adipinsäure und Hexamethylendiamin ableiten und
$A_4$) 20 bis 30 Gew. -% Einheiten, die sich von Isophthalsäure und Hexamethylendiamin ableiten.

Enthält die Komponente ($A_4$) symmetrische Dicarbonsäuren, bei denen die Carboxylgruppen in para-Stellung stehen, so empfiehlt es sich, diese mit ($A_1$) und ($A_2$) oder ($A_1$) und ($A_3$) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. USA-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und $\epsilon$ -Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew. -% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD $\epsilon$ -Caprolactam enthalten.

Bei den teilaromatischen Copolyamide sollen erfindungsgemäß solche verstanden werden, die einen Kristallinitätsgrad > 10 %, bevorzugt > 15 %, und insbesondere > 20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Selbstverständlich können auch Mischungen der teilaromatischen Copolyamide umgesetzt werden, wobei das Mischungsverhältnis beliebig ist.

Als Komponente B) enthalten die erfindungsgemäßen Formmassen 22 bis 89, bevorzugt 33 bis 94 und insbesondere 50 bis 75 Gew.-% eines thermoplastischen teilkristallinen Polyamids, welches verschieden von A) ist.

Die Polyamide der erfindungsgemäßen Formmassen weisen im allgemeinen eine relative Viskosität $\eta_{rel}$ von 1,7 bis 5,0 auf, bestimmt in einer 1 gew. -%igen Lösung in 96 gew. -%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline Harze mit einem Molekulargewicht (Gewichtsmittelwert) von mindestens 5.000, wie sie z.B. in den amerikanischen Patentschriften 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure und Dodecandisäure als Säuren genannt.

Als Diamine eignen sich besonders Alkandiamine mit 6 bis 12, insbesondere 6 bis 8 Kohlenstoffatomen, wobei Hexamethylendiamin bevorzugt ist.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4, 6). Herstellungsverfahren für Polyamide dieser Struktur sind z.B. in den EP-A 38 094, EP-A 38 582 und EP-A 39 524 beschrieben.

Als weiteren Bestandteil können die erfindungsgemäßen Formmassen 0 bis 60, vorzugsweise 1 bis 50, insbesondere 15 bis 35 Gew.% eines faser- oder teilchenförmigen Füllstoffes (Komponente (C)) oder deren Mischungen enthalten.

Bevorzugte faserförmige Verstärkungsstoffe (Komponente (C)) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) oder (B) mit einer Schlichte und einem Haftvermittler ausgerüstet sein. Im allgemeinen haben die verwendeten Glasfasern einen Durchmesser im Bereich von 6 bis 20 mm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Als Komponente (D) können die erfindungsgemäßen thermoplastischen Formmassen 0 bis 40, vorzugsweise 0,5 bis 20 und insbesondere 1 bis 15 Gew.-% eines kautschukelastischen Polymerisats enthalten. Bevorzugte kautschukelastische Polymerisate sind Polymerisate auf Basis von Olefinen, die aus folgenden Komponenten aufgebaut sind:

$d_1$) 40-100 Gew.-% mindestens eines $\alpha$ -Olefins mit 2-8 C-Atomen

$d_2$) 0-50 Gew. -% eines Diens

$d_3$) 0-45 Gew. -% eines $C_1$-$C_{12}$-Alkylesters der Acrylsäure oder Methacrylsäure oder Mischungen derartiger Ester,

$d_4$) 0-40 Gew. -% einer ethylenisch ungesättigen Mono- oder Dicarbonsäure oder einem funktionellen Derivat einer solchen Säure

$d_5$) 0-40 Gew. -% eines Epoxygruppen enthaltenden Monomeren,

$d_6$) 0-5 Gew. -% sonstiger radikalisch polymerisierbaren Monomerer, mit der Maßgabe, daß die Komponente (D) kein Olefinhomopolymerisat ist.

Als erste bevorzugte Gruppe sind die sogenannten Ethylen-Propylen- (EPM) - bzw. Ethylen-Propylen-Dien- (EPDM) -Kautschuke zu nennen, die vorzugsweise ein Verhältnis von Ethylen- zu Propyleneinheiten im Bereich von 40:60 bis 90:10 aufweisen.

Die Mooney-Viskositäten (MLI + 4/100 ° C) solcher, vorzugsweise unvernetzter, EPM- bzw. EPDM-Kautschuke (Gelgehalte im allgemeinen unter 1 Gew. -%) liegen bevorzugt im Bereich von 25 bis 100, insbesondere von 35 bis 90 (gemessen am großen Rotor nach 4 Minuten Laufzeit bei 100 ° C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $d_2$) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2, 5-Dimethylhexa-1, 5-dien und Octa-1, 4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 2 bis 20 und besonders bevorzugt 3 bis 15 Gew. -%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von a-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $d_3$) an den Olefinpolymerisaten beträgt 0-60, vorzugsweise 10-50 und insbesondere 30-45 Gew.-%.

Anstelle der Ester $d_3$) oder zusätzlich zu diesen können in den Olefinpolymerisaten auch säurefunktionelle und/oder latent säurefunktionelle Monomere ethylenisch ungesättigter Mono- oder Dicarbonsäuren $d_4$)

oder Epoxygruppen aufweisende Monomere $d_5$) enthalten sein.

Als Beispiele für Monomere $d_4$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C1-C1"-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

$R^1C(COOR^2) = C(COOR^3)R^4$ (I)

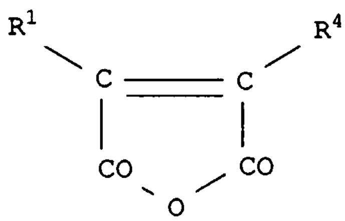

(II)

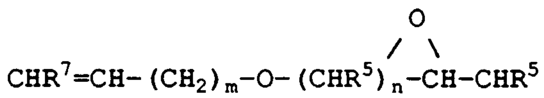

(III)

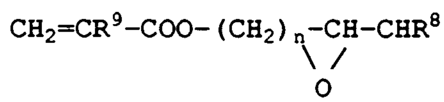

(IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R1 - R7 ist Wasserstoff, für m der Wert 0 oder 1 und für n der Wert 1. Die entsprechenden Verbindungen sind Maleinsäure, Fumarsäure, Maleinsäureanhydrid, $d_4$) bzw. Alkenylglycidylether oder Vinylglycidylether $d_5$).

Bevorzugte Verbindungen der Formeln I, II, III und IV sind Maleinsäure und Maleinsäureanhydrid als Komponente $d_4$) und Epoxygruppen-enthaltende Ester der Acrylsäure und/oder Methacrylsäure, wobei Glycidylacrylat und Glycidylmethacrylat (als Komponente $d_5$) besonders bevorzugt werden.

Der Anteil der Komponenten $d_4$) bzw. $d_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere $d_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190 °C und 2,16 kg Belastung).

Außer den vorstehenden bevorzugten kautschukelastischen Polymerisaten auf Basis von Olefinen eignen sich als Elastomere (D) beispielsweise die folgenden Polymerisate.

In erster Linie sind hier Emulsionspolymerisate zu nennen, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung des Kautschukteils der Elastomeren seien Acrylate wie n-Butylacrylat und 2-Ethylhexylacrylat, entsprechende Methacrylate, Butadien und Isopren sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, a-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

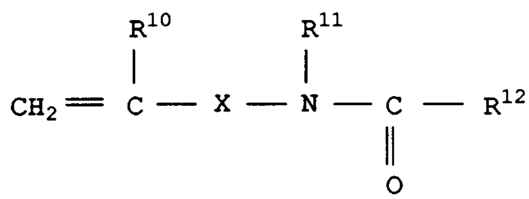

eingeführt werden können,
wobei die Substituenten folgende Bedeutung haben können:

- $R^{10}$ Wasserstoff, oder eine $C_1$-$C_4$-Alkylgruppe,
- $R^{11}$ Wasserstoff, eine $C_1$-$C_8$-Alkylgruppe oder eine Arylgruppe, insbesondere Phenyl,
- $R^{12}$ Wasserstoff, eine $C_1$-$C_{10}$-Alkyl-, eine $C_6$-$C_{12}$-Arylgruppe oder OR13,
- $R^{13}$ eine $C_1$-$C_8$-Alkyl- oder $C_6$-$C_{12}$-Arylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Arylengruppe oder

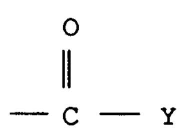

- Y O-Z- oder NH-Z und
- Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino) methyl-acrylat und (N, N-Diethylamino) ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine Doppelbindung mit etwa gleicher Geschwindigkeit wie die übrigen Monomeren polymerisiert, während der restliche Teil der Doppelbindungen deutlich langsamer polymerisiert. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (D) bis zu 5 Gew.%, vorzugsweise nicht mehr als 3 Gew.%, bezogen auf (D).

Im folgenden seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| D/1 | Buta-1,3-dien, Isopren, n-Butylacrylat, Ethylhexylacrylat oder deren Mischungen | Styrol, Acrylnitril, Methylmethacrylat |
| D/2 | wie D/1 aber unter Mitverwendung von Vernetzern | wie D/1 |
| D/3 | wie D/1 oder D/2 | n-Butylacrylat, Ethylacrylat, Methylacrylat, Buta-1,3-dien, Isopren, Ethylhexylacrylat |
| D/4 | wie D/1 oder D/2 | wie D/1 oder D/3 aber unter Mitverwendung von Monomeren mit reaktiven Gruppen wie hierin beschrieben |
| D/5 | Styrol, Acrylnitril, Methylmethacrylat oder deren Mischungen | erste Hülle aus Monomeren wie unter D71 und D/2 für den Kern beschrieben<br>zweite Hülle wie unter D/1 oder D/3 für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (D) können auch nach anderen üblichen Verfahren, z.B. durch Suspensionspolymerisation, hergestellt werden.

Neben den wesentlichen Komponenten A) und B) sowie gegebenenfalls C) und D) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu,(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone (Stearon® der Firma Henkel) eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich durch gute mechanische Eigenschaften, insbesondere eine gute Steifigkeit und Festigkeit aus.

Zusätzlich weisen Formkörper aus den erfindungsgemäßen Formmassen eine gute Oberfläche auf. Insbesondere glasfaserverstärkte und gegebenenfalls eingefärbte Formkörper zeigen eine einheitliche Oberfläche und einen verbesserten Oberflächenglanz.

Infolge dieses Eigenschaftsspektrums eignen sich die aus den erfindungsgemäßen Formmassen herstellbaren Formkörper besonders für Anwendungen von Außenteilen im KFZ-Bereich sowie für Sportartikel.

## Beispiele

Es wurden folgende Komponenten eingesetzt:

Komponente A/1

Ein teilaromatisches Copolyamid, aufgebaut aus
$A_1$) 70 Gew. -% Einheiten, die sich von Terephthalsäure und Hexamethylendiamin ableiten und
$A_2$) 30 Gew.-% Einheiten, die sich von $\epsilon$ -Caprolactam ableiten.
Die Viskositätszahl nach ISO 307 betrug 141 ml/g (gemessen in 96 gew.-%iger $H_2SO_4$ als 0,5 gew.-%ige Lösung bei 23 ° C). Kristallisationsgrad: 25 %.

Komponente A/2

Ein teilaromatisches Copolyamid, aufgebaut aus
$A_1$) 62 Gew. -% Einheiten, die sich von Terephthalsäure und Hexamethylendiamin ableiten,
$A_3$) 13 Gew. -% Einheiten, die sich von Adipinsäure und Hexamethylendiamin ableiten und
$A_4$) 26 Gew. -% Einheiten, die sich von Isophthalsäure und Hexamethylendiamin ableiten.
Die Viskositätszahl betrug 135 ml/g.
Kristallisationsgrad: 40 %.

Komponente B/1

Polyamid-6,6 (Polyhexamethylenadipinsäureamid) mit einer Viskositätszahl von 151 ml/g, entsprechend einer relativen Viskosität $\eta_{rel}$ von 2,7 (gemessen in 96 gew.-%iger $H_2SO_4$ als 0,5 gew.-%ige Lösung nach ISO 307, Ultramid® A3 der BASF AG).

Komponente B/2 (zum Vergleich)

Ein amorphes Copolyamid, aufgebaut aus
60 Gew. -% Einheiten, die sich von Hexamethylendiamin und Isophthalsäure ableiten und
40 Gew. -% Einheiten, die sich von Hexamethylendiamin und Terephthalsäure ableiten.
Die Viskositätszahl betrug 140 ml/g.

Komponente B/3 (zum Vergleich)

Ein amorphes Copolyamid, aufgebaut aus
50 Gew. -% Einheiten, die sich von Laurinlactam ableiten und
50 Gew.-% Einheiten, die sich von Isophthalsäure und Bis-(4-amino-methylcyclohexyl)methan ableiten.

Komponente B/4 (zum Vergleich)

Ein amorphes, aliphatisches Polyamid 6/36, bestehend aus Einheiten von Hexamethylendiamin und einer $C_{36}$-gesättigten Fettsäure (Priodit® 2022 der Firma Unichema GmbH, DE.
Viskositätszahl: 117 ml/g (gemessen als 0,5 %ige Lösung in Phenol-Dichlorbenzol (1:1) bei 23 ° C).

Komponente B/5

Polyamid 6 (Poly- $\epsilon$ -caprolactam) mit einer Viskositätszahl von 144 ml/g (Ultramid® B3 der BASF AG).

Komponente C

Schnitt-Glasfasern mit einem mittleren Durchmesser von 10 µm, Faserlänge 4,5 mm.

Komponente E

Ruß mit einer spezifischen Oberfläche von 220 $m^2$/g und einer durchschnittlichen Partikelgröße von 16 µm.

Herstellung der Formmassen

Die Komponenten A) und B) sowie C) und E) wurden auf einem Zweischnekkenextruder bei 310 ° C konfektioniert, in Stränge gegossen, durch ein Wasserbad geleitet und granuliert sowie getrocknet.

Auf einer Spritzgußmaschine wurden bei 300 ° C Prüfkörper gespritzt und geprüft.

Die Prüfung der Glanzzahl erfolgte an Prüfkörpern in Plattenform (110 x 110 x 3 mm) nach DIN 67 530. Danach entspricht die beste Oberfläche einem Oberflächenglanzwert von ungefähr 92.

Die Bestimmung des Elastizitätsmodul erfolgte nach DIN 53 457 an Schulterstäben.

Ferner wurde mittels einer Mettler-DSC die Rekristallisationstemperatur bestimmt.

Die Zusammensetzungen der Formmassen und die Ergebnisse der Messungen sind der Tabelle zu entnehmen.

Tabelle

| Komponenten | Beispiele | | | | | | | |
|---|---|---|---|---|---|---|---|---|
| | 1* | 2 | 3 | 4 | 5 | 6 | 7 | 8* |
| A/1 | | 1,4 | 3,5 | 7 | 10,4 | 13,9 | 17,4 | 27,8 |
| A/2 | | | | | | | | |
| B/1 | 69,5 | 68,1 | 66 | 62,5 | 59,1 | 55,6 | 52,1 | 41,7 |
| B/2 | | | | | | | | |
| B/3 | | | | | | | | |
| B/4 | | | | | | | | |
| B/5 | | | | | | | | |
| C | 30 | 30 | 30 | 30 | 30 | 30 | 30 | 30 |
| E | 0,5 | 0,5 | 0,5 | 0,5 | 0,5 | 0,5 | 0,5 | 0,5 |
| Oberflächenglanz | 63 | 72 | 76 | 84 | 89 | 77 | 60 | 54 |
| $T_{krist.}$ [°C] | 231 | 224 | 223 | 222 | 220 | 217 | 214 | 212 |
| E-Modul [N/mm$^2$] | 10.300 | 10.300 | 10.500 | 10.100 | 10.200 | 10.100 | 10.100 | 10.000 |

*) zum Vergleich

| Komponenten | Beispiele | | | | | | | | | |
|---|---|---|---|---|---|---|---|---|---|---|
| | 9* | 10* | 11 | 12* | 13* | 14* | 15* | 16* | 17* | 18* |
| A/1 | 55,6 | 66 | | | | | | | | |
| A/2 | | | 7 | | | | | | | |
| B/1 | 13,9 | 3,5 | 62,5 | 68,1 | 66 | 62,5 | 48,6 | 62,5 | 62,5 | 62,5 |
| B/2 | | | | 1,4 | 3,5 | 7 | 20,9 | | | |
| B/3 | | | | | | | | 7,0 | | |
| B/4 | | | | | | | | | 7,0 | |
| B/5 | | | | | | | | | | 7,0 |
| C | 30 | 30 | 30 | 30 | 30 | 30 | 30 | 30 | 30 | 30 |
| E | 0,5 | 0,5 | 0,5 | 0,5 | 0,5 | 0,5 | 0,5 | 0,5 | 0,5 | 0,5 |
| Oberflächenglanz | 17 | 11 | 85 | 53 | 55 | 58 | 46 | 66 | 49 | 55 |
| $T_{krist.}$ [°C] | 237 | 247 | 222 | 229 | 227 | 224 | 214 | 227 | 229 | 232 |
| E-Modul [$N/mm^2$] | 10.200 | 11.100 | 10.300 | 10.200 | 9.600 | 9.400 | 9.100 | 10.100 | 9.200 | 10.200 |

*) zum Vergleich

## Patentansprüche

**1.** Thermoplastische Formmassen, enthaltend

A) 1 bis 18 Gew.-% eines teilaromatischen Copolymerisats und einem Triamingehalt von unter 0,5 Gew.-% aufgebaut aus

$A_1$) 20 bis 90 Gew.-% Einheiten, die sich von Terephthalsäure und Hexamethylendiamin ableiten,

$A_2$) 0 bis 50 Gew.-% Einheiten, die sich von $\epsilon$ -Caprolactam ableiten und

$A_3$) 0 bis 80 Gew. -% Einheiten, die sich von Adipinsäure und Hexamethylendiamin ableiten,

$A_4$) 0 bis 40 Gew. -% weiteren polyamidbildenden Monomeren,

wobei der Anteil der Komponente ($A_2$) oder ($A_3$) oder ($A_4$) oder deren Mischungen mindestens 10 Gew. -% beträgt,

B) 22 bis 99 Gew. -% eines von A) verschiedenen teilkristallinen Polyamids

C) 0 bis 60 Gew.-% faser- oder teilchenförmige Füllstoffe oder deren Mischungen

D) 0 bis 40 Gew.-% eines kautschukelastischen Polymerisates.

**2.** Thermoplastische Formmassen nach Anspruch 1 enthaltend

A) 4 bis 17 Gew. -%

b) 33 bis 94 Gew. -%

C) 1 bis 50 Gew.-%.

**3.** Thermoplastische Formmassen nach den Ansprüchen 1 oder 2, in denen die Füllstoffe Glasfasern, Wollastonit, Kohlenstoffasern oder Mischungen dieser Stoffe sind.

**4.** Thermoplastische Formmassen nach den Ansprüchen 1 bis 3, in denen die Komponenten B) aus Polyhexamethylenadipinsäureamid oder Polytetramethylenadipinsäureamid oder Poly- $\epsilon$ -caprolactam oder deren Mischungen bestehen.

**5.** Thermoplastische Formmassen nach den Ansprüchen 1 bis 4, enthaltend als Komponente A) ein teilaromatisches Copolyamid aufgebaut aus

$A_1$) 50 bis 80 Gew.-% Einheiten, die sich von Terephthalsäure und hexamethylendiamin ableiten und

$A_2$) 20 bis 50 Gew.-% Einheiten, die sich von $\epsilon$ -Caprolactam ableiten.

**6.** Thermoplastische Formmassen nach den Ansprüchen 1 bis 5, in denen die Komponente A) einen Kristallinitätsgrad >10 % aufweist.

**7.** Verwendung der thermoplastischen Formmassen gemäß den Ansprüchen 1 bis 6 zur Herstellung von Folien, Fasern und Formkörpern.

**8.** Formkörper, erhältlich aus thermoplastischen Formmassen gemäß den Ansprüchen 1 bis 6.

Abb. 1

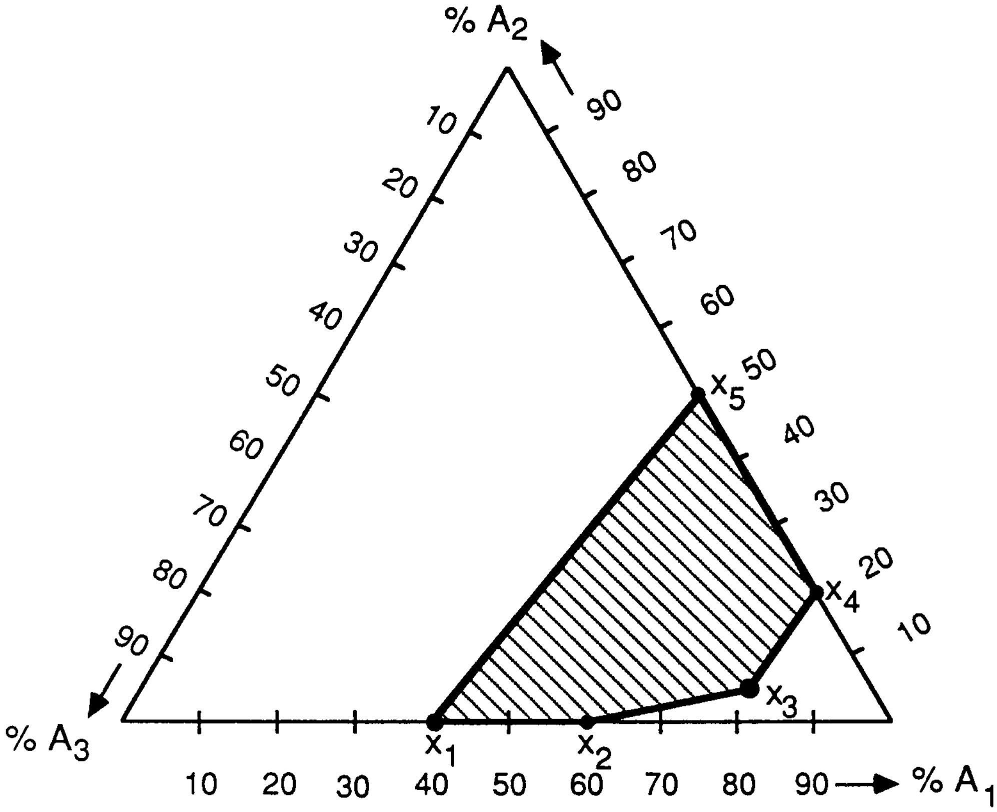

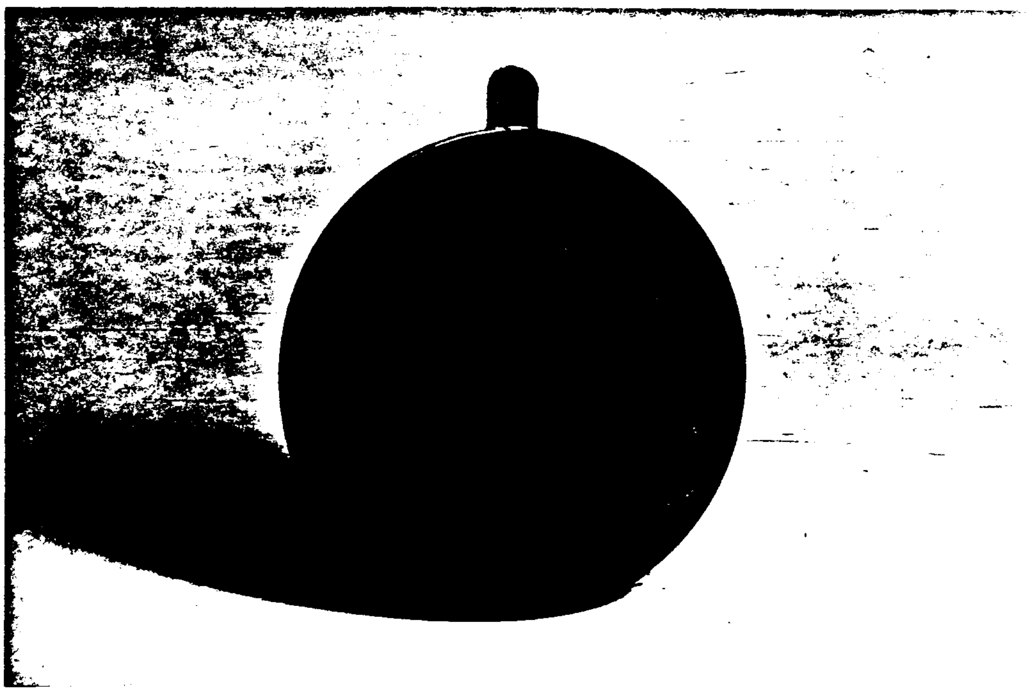

Abb. 2

Oberflächenglanz (Beispiel: gefärbte Rundscheiben)

Schlechte Oberfläche ≙ DIN-Glanzwert ≈ 30

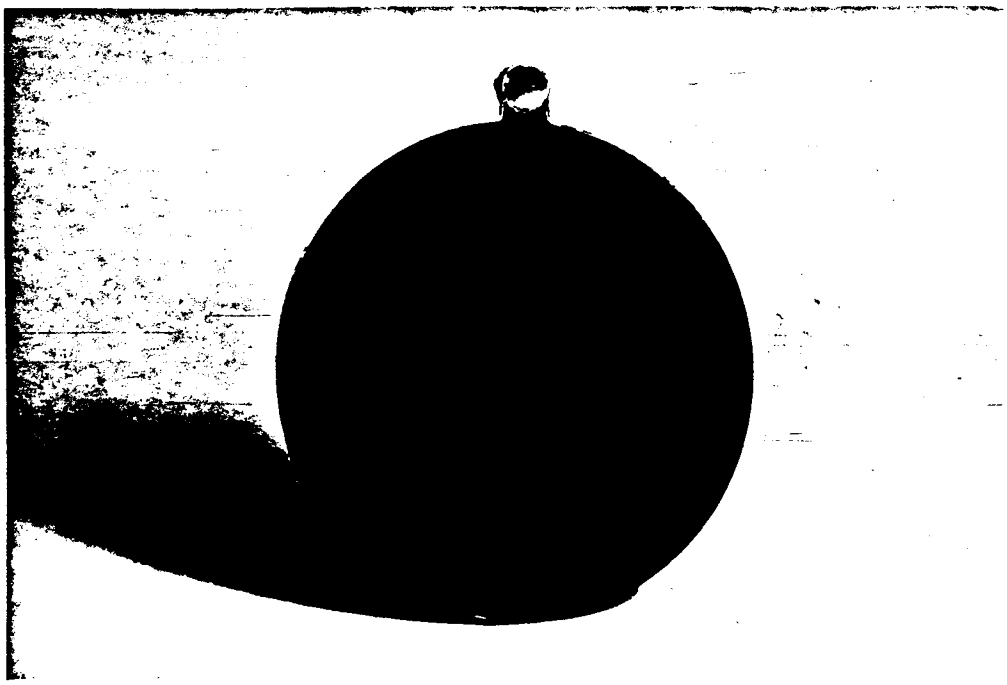

Abb. 3

Oberflächenglanz ≙ DIN-Glanzwert ≈ 70

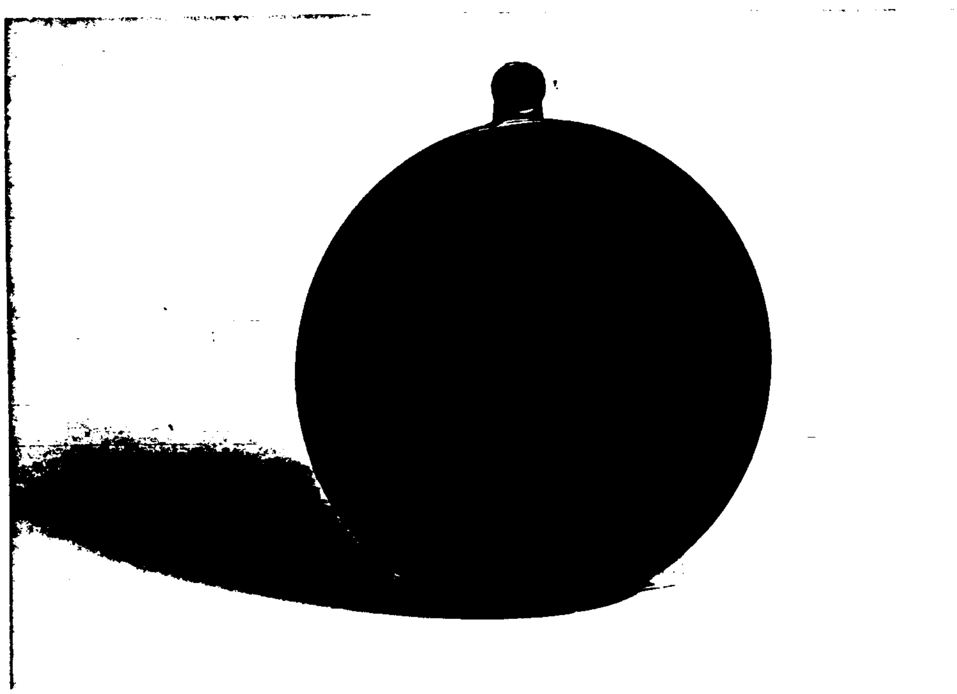

Abb. 4

Oberfläche ≙ DIN-Glanzwert ≈ 92